# EUROPÄISCHE PATENTSCHRIFT

(11) **EP 2 432 675 B1**
(45) Veröffentlichungstag und Bekanntmachung des Hinweises auf die Patenterteilung: **16.01.2013**
(21) Anmeldenummer: 10718096.0
(22) Anmeldetag: 06.04.2010
(51) Int. Cl.: B62D 15/02, B60W 30/06

(54) **VORRICHTUNG UND VERFAHREN ZUM UNTERSTÜTZTEN EINPARKEN EINES FAHRZEUGS**
DEVICE AND METHOD FOR THE ASSISTED PARKING OF A VEHICLE
DISPOSITIF ET PROCÉDÉ D'AIDE AU STATIONNEMENT D'UN VÉHICULE

(30) Priorität: 20.05.2009 DE 102009003298
(43) Veröffentlichungstag der Anmeldung: 28.03.2012
(73) Patentinhaber: Robert Bosch GmbH, 70442 Stuttgart (DE)
(72) Erfinder: PAMPUS, Christian, 71229 Leonberg (DE); FEHSE, Meike, 71254 Ditzingen (DE)
(86) Internationale Anmeldenummer: PCT/EP2010/054485
(87) Internationale Veröffentlichungsnummer: WO 2010/133395

(56) Entgegenhaltungen:
- DE-A1-102005 037 468

## Beschreibung

Die vorliegende Erfindung betrifft eine Vorrichtung und ein Verfahren zum unterstützten Einparken eines Fahrzeugs, insbesondere eines Kraftfahrzeugs, in eine quer zum Fahrzeug vorhandene Parklücke, mit wenigstens einer Sensoreinrichtung, die zumindest zur Erkennung der Parklücke ausgebildet ist und mit einem Anzeigemittel, durch das einem Fahrer des Fahrzeugs eine Bewegungsbahn anzeigbar ist, auf der das Fahrzeug bewegbar ist.

Vorrichtungen zum unterstützten Einparken eines Fahrzeugs sind bereits als semiautonome Einparksysteme bekannt, die das Einparken in Querparklücken unterstützen. Derartige semiautonome Einparksysteme führen das Fahrzeug auf einer berechneten Bewegungsbahn. Die Führung des Fahrzeugs kann durch optische Signale, durch akustische Signale oder durch einen aktiven Eingriff in die Führung des Fahrzeugs erfolgen, beispielsweise durch eine wenigstens hilfsweise unterstützte Lenksteuerung. Um die Informationen zur Steuerung des Fahrzeugs durch das semiautonome Einparksystem zu erhalten, ist zunächst eine vollständige Vermessung der Parklücke durch das Einparksystem erforderlich. Hierfür führt der Fahrer das Fahrzeug zunächst vollständig an der Parklücke vorbei, so dass das Einparksystem die Parklücke vermessen kann. Das Vorbeiführen des Fahrzeugs erfolgt dabei durch eine Vorwärtsbewegung. Bei Einlegen des Rückwärtsgangs kann das Einparksystem aktiviert werden, um das Kraftfahrzeug mit entsprechender Unterstützung in die Parklücke zu führen.

Aus der DE 10 2005 037 468 A1 ist eine Vorrichtung zur Unterstützung eines Einparkvorgangs eines Fahrzeugs in eine quer zum Fahrzeug vorhandene Parklücke bekannt. Die Vorrichtung weist eine Parklückenvermessungseinrichtung auf, so dass der Fahrer das Kraftfahrzeug an der Querparklücke vorbeiführen muss, um über eine Sensoranordnung die Querparklücke mit der Parklückenvermessungseinrichtung zu vermessen. Nach vollständiger Vermessung der Parklücke ist das Kraftfahrzeug durch den Fahrer bereits an der Parklücke vorbeigeführt worden. Aufgrund dieses Erfordernisses kann von weiteren Verkehrsteilnehmern angenommen werden, dass der Fahrer des Fahrzeugs die Parklücke freigibt bzw. diese nicht zu belegen wünscht. Ferner ergibt sich der Nachteil, dass die sich durch das Vorbeiführen des Fahrzeugs an der Parklücke ergebende Startposition zur Aktivierung des semiautonomen Einparksystems nicht vorteilhaft ist, so dass häufig komplexe Rangierzüge ausgeführt werden müssen, um das Fahrzeug in die Querparklücke zu bewegen.

Es ist daher die Aufgabe der vorliegenden Erfindung, eine Vorrichtung zum unterstützten Einparken eines Fahrzeugs vorzuschlagen, durch die die Nachteile des vorstehend genannten Standes der Technik überwunden werden und durch die das unterstützte Einparken eines Kraftfahrzeugs in eine Querparklücke weiter verbessert wird.

Diese Aufgabe wird ausgehend von einer Vorrichtung zum unterstützten Einparken eines Fahrzeugs in eine Parklücke gemäß dem Oberbegriff des Anspruchs 1 sowie ausgehend von einem Verfahren gemäß dem Anspruch 8 mit den jeweils kennzeichnenden Merkmalen gelöst. Vorteilhafte Weiterbildungen der Erfindung sind in den abhängigen Ansprüchen angegeben.

Die Erfindung schließt die technische Lehre ein, dass die Vorrichtung zur Bestimmung wenigstens zwei möglicher Bewegungsbahnen ausgebildet ist, auf denen das Fahrzeug durch den Fahrer in eine Startposition bewegbar ist, aus der das Fahrzeug durch wenigstens einen nachfolgenden durch eine Einparkvorrichtung geführten Einparkzug in die Parklücke bewegbar ist.

Das unterstützte Einparken betrifft erfindungsgemäß die Bestimmung wenigstens zwei möglicher Bewegungsbahnen, auf denen das Fahrzeug durch den Fahrer in eine Startposition bewegbar ist. Aus der Startposition heraus kann der Fahrer eine Einparkvorrichtung aktivieren, die das darauf folgend geführte Einparken in die Parklücke ermöglicht. Kern der Erfindung ist eine Vorrichtung zum unterstützten Einparken eines Fahrzeugs, wobei die Unterstützung der Aktivierung der Einparkvorrichtung zum geführten Einparken in die Parklücke vorgelagert ist. Die erfindungsgemäße Vorrichtung zum unterstützten Einparken des Fahrzeugs bietet den Vorteil, dass die Vorrichtung zumindest zwei mögliche Bewegungsbahnen bestimmt, aus denen der Fahrer eine günstige Bewegungsbahn in Abhängigkeit von der Parksituation auswählen kann. Nach der Führung des Fahrzeugs auf einer der möglichen Bewegungsbahnen gelangt das Fahrzeug erst in die Startposition, um anschließend wenigstens einen geführten Einparkzug unter Führung durch eine wenigstens semiautonome Einparkvorrichtung in die Parklücke auszuführen.

Es ist von besonderem Vorteil, dass eine erste mögliche Bewegungsbahn als Bahn eines Linkszuges und eine zweite mögliche Bewegungsbahn als Bahn eines Geradeauszuges ausgebildet ist. Der Geradeauszug betrifft dabei eine Fortführung der Bewegung des Fahrzeugs an der Parklücke vorbei, wobei der Linkszug eine Bewegung des Fahrzeugs in Richtung zur Längserstreckung der Querparklücke betrifft, derart, dass in einem nachfolgenden geführten Einparkzug das Fahrzeug lediglich rückwärts geführt werden muss.

Vorzugsweise kann der Fahrer eine der durch die Vorrichtung bestimmten Bewegungsbahnen auswählen, wobei abhängig von der Einparksituation der Linkszug häufig ein Führen des Fahrzeugs in den Gegenverkehr betrifft. Führt der Fahrer das Fahrzeug bis auf die Höhe der Querparklücke, so dass die Sensoreinrichtung die Parklücke als solche erkennt, so kann unmittelbar darauf folgend die erfindungsgemäße Vorrichtung die möglichen Bewegungsbahnen bestimmen. Wählt der Fahrer den Linkszug, kann dieser das Fahrzeug auf der Bahn des Linkszugs bewegen, ohne vollständig an der Parklücke vorbeizufahren. Steht das Fahrzeug in der Startposition nach Ausführung des Linkszuges, kann die Einparkvorrichtung zum geführten Einparken in die Parklücke aktiviert werden. Der gleiche Vorgang wird ausgeführt, wenn der Fahrer den Geradeauszug wählt, wobei sich durch den Geradeauszug der Vorteil ergibt, dass das Fahrzeug nicht in den Gegenverkehr bewegt werden muss. Der Geradeauszug wird jedoch vorzugsweise von der Vorrichtung derart bestimmt, dass der Fahrer das Fahrzeug nicht vollständig an der Parklücke vorbei fahren muss.

Die Vorrichtung kann ferner eine Information an den Fahrer bereitstellen, an welcher Position die Startposition erreicht ist, nachdem der Fahrer das Fahrzeug auf einer der möglichen Bewegungsbahnen geführt hat.

Vorzugsweise ist durch die Bahn des Linkszuges und die Bahn des Geradeauszuges ein Bewegungsfenster bestimmt, wobei das Fahrzeug innerhalb des Bewegungsfensters in viele mögliche Startpositionen bewegbar ist. Das Fahrzeug kann dabei auf einer beliebigen Bahn innerhalb des Bewegungsfensters in eine Startposition bewegt werden, wobei der Linkszug eine erste Grenzbahn und wobei der Geradeauszug eine zweite Grenzbahn zur Berandung des Bewegungsfensters darstellt. Unter einer Bahn ist im Rahmen der vorliegenden Erfindung nicht grundsätzlich eine gekrümmte Bewegungsstrecke zu verstehen, sondern eine Bahn kann vorliegend auch eine gerade ausgebildete Bewegungsstrecke umfassen.

Es ist von besonderem Vorteil, dass die Vorrichtung ein Anzeigemittel aufweist, durch das die erste Bewegungsbahn, die zweite Bewegungsbahn und bevorzugst auch das durch die Bewegungsbahnen bestimmte Bewegungsfenster anzeigbar ist. Das Anzeigemittel kann dabei im Sichtbereich des Fahrers im Kraftfahrzeug angeordnet sein. Durch die Vorrichtung ist eine Ist-Bahn bestimmbar, die sich aus der aktuellen Stellung des Lenkrades des Kraftfahrzeugs ergibt, wobei die Ist-Bahn auf dem Anzeigemittel ebenfalls anzeigbar ist. Betätigt der Fahrer das Lenkrad, so kann die Ist-Bahn entsprechend der Stellung des Lenkrades im Anzeigemittel bewegt werden. Wählt der Fahrer den Linkszug, um in die erste Startposition zu gelangen, so betätigt der Fahrer das Lenkrad, bis die Ist-Bahn mit der Bahn des Linkszuges im Anzeigemittel übereinstimmt. Wählt der Fahrer den Geradeauszug, so bewegt dieser das Lenkrad, bis die Ist-Bahn mit dem der Bahn des Geradeauszuges übereinstimmt. Selbstverständlich kann der Fahrer auch eine Bahn wählen, die sich innerhalb des Bewegungsfensters zwischen der Bahn des Linkszuges und der Bahn des Geradeauszuges befindet. Insbesondere kann eine Bahn gewählt werden, die derart bestimmt ist, dass das Fahrzeug nicht in den Gegenverkehr bewegt werden muss, um dennoch in eine Startposition zu gelangen, die einen einzigen geführten Rückwärtszug durch die anschließende zu aktivierende Einparkvorrichtung ermöglicht.

Die vorliegende Erfindung ist insbesondere dadurch gekennzeichnet, dass der Linkszug und der Geradeauszug, der von der erfindungsgemäßen Vorrichtung bestimmt wird, als nichtgeführte Vorwärtszüge des Fahrzeugs durch den Fahrer ausführbar sind, wobei der zumindest eine auf den Linkszug bzw. den Geradeauszug folgende geführte Einparkzug des Fahrzeugs in die Parklücke als ein durch eine assistierende Einparkvorrichtung geführter Rückwärtszug ausführbar ist. Die erfindungsgemäße Vorrichtung betrifft folglich lediglich die Vorbereitung zur Ausführung eines Parkvorgangs, der durch eine Einparkvorrichtung mit geführten Einparkzügen in die Parklücke ausführbar ist. Die Vorrichtung schlägt dem Fahrer zwar mögliche Bewegungszüge wie den Linkszug oder den Geradeauszug vor, der Fahrer führt das Fahrzeug jedoch selbsttätig. Eine Führung besteht allenfalls darin, dass auf dem Anzeigemittel die Ist-Bahn angezeigt wird, so dass eine Abweichung von der gewünschten Bahn, beispielsweise der Bahn des Linkszuges oder der Bahn des Geradeauszuges, ebenfalls zur Anzeige gebracht wird. Vorzugsweise unterscheidet sich die vorliegende Vorrichtung jedoch von derartigen Vorrichtungen, die das Fahrzeug durch akustische, optische oder sogar aktiv eingreifende Maßnahmen in die Parklücke hinein führen.

Die Parklücke betrifft vorliegend eine Querparklücke und ist seitlich durch wenigstens ein Hindernis begrenzt. Vorzugsweise ist die Querparklücke durch zwei Hindernisse begrenzt, zwischen denen sich die Parklücke erstreckt. Die Erkennung der Parklücke durch die Sensoreinrichtung umfasst wenigstens die Erkennung eines Eckbereiches zumindest eines der Hindernisse. Die Hindernisse können weitere, parkende Fahrzeuge betreffen, so dass der Eckbereich vorzugsweise einen vorderen oder einen hinteren Eckbereich eines Fahrzeugs betrifft. Insbesondere ist die Erkennung nur eines Eckbereiches eines Hindernisses ausreichend, um die Parklücke durch die Sensoreinrichtung als solche zu erkennen. Dabei genügt es, das Fahrzeug lediglich am Eckbereich des Hindernisses vorbeizuführen, ohne eine vollständige Vermessung der Parklücke durch eine Parklückenvermessungseinrichtung vorzunehmen.

Die vorliegende Erfindung richtet sich ferner auf ein Verfahren zum unterstützten Einparken eines Fahrzeugs, insbesondere eines Kraftfahrzeugs, in eine quer zum Fahrzeug angeordnete Parklücke mit wenigstens einer Sensoreinrichtung, durch die die Parklücke zumindest erkannt werden kann, und mit einem Anzeigemittel, durch das einem Fahrer des Fahrzeugs eine Bewegungsbahn angezeigt wird, auf der das Fahrzeug bewegt werden kann. Das Verfahren umfasst dabei wenigstens die Schritte des Erreichens der Parklücke durch das Fahrzeug, das Erkennen der Parklücke durch die Vorrichtung und die Bestimmung möglicher Bahnen durch die Vorrichtung, auf denen ein Rangierzug in eine Startposition zur Ausführung eines geführten Einparkzuges des Fahrzeugs durch eine Einparkvorrichtung erfolgen kann.

Nach der Bestimmung möglicher Bahnen durch die Vorrichtung kann ein Rangierzug nach einer möglichen, bestimmten Bahn durch den Fahrer ausgeführt werden. Dafür werden nach der Bestimmung möglicher Bahnen durch die Vorrichtung die Bahnen auf einem Anzeigemittel zur Anzeige gebracht, so dass sich der Fahrer zunächst für eine der vorgeschlagenen Bahnen entscheiden muss. Ist die Entscheidung durch den Fahrer in Abhängigkeit von der Einparksituation gefallen, kann dieser den Rangierzug ausführen.

Nach Ausführung des Rangierzuges durch den Fahrer ist dieser in die Startposition gelangt. Ausgehend von der erreichten Startposition wird durch den Fahrer eine Aktivierung einer assistierenden Einparkvorrichtung zur Ausführung eines geführten Einparkzuges durch eine unabhängige assistierende Einparkvorrichtung vorgenommen.

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine schematische Ansicht eines Kraftfahrzeugs in einer Parksituation, das an eine Parklücke gelangt ist, wobei die Parklücke durch eine Sensoreinrichtung erkannt wird,
- Figur 2: die Parksituation gemäß Figur 1, wobei mögliche Bewegungsbahnen dargestellt sind, um das Fahrzeug in eine Startposition zu führen und
- Figur 3: ein Diagramm eines Verfahrens zum unterstützten Einparken eines Fahrzeugs gemäß der vorliegenden Erfindung.

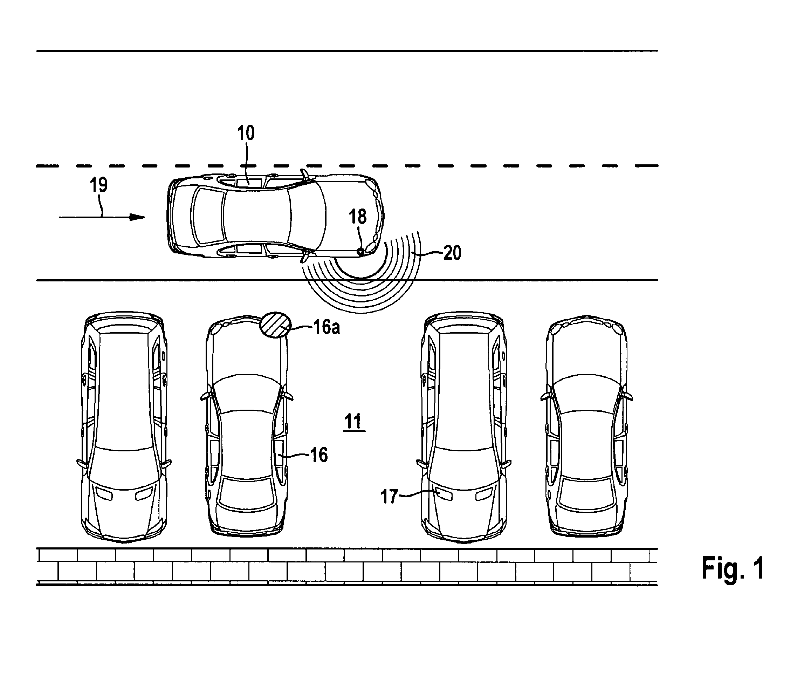

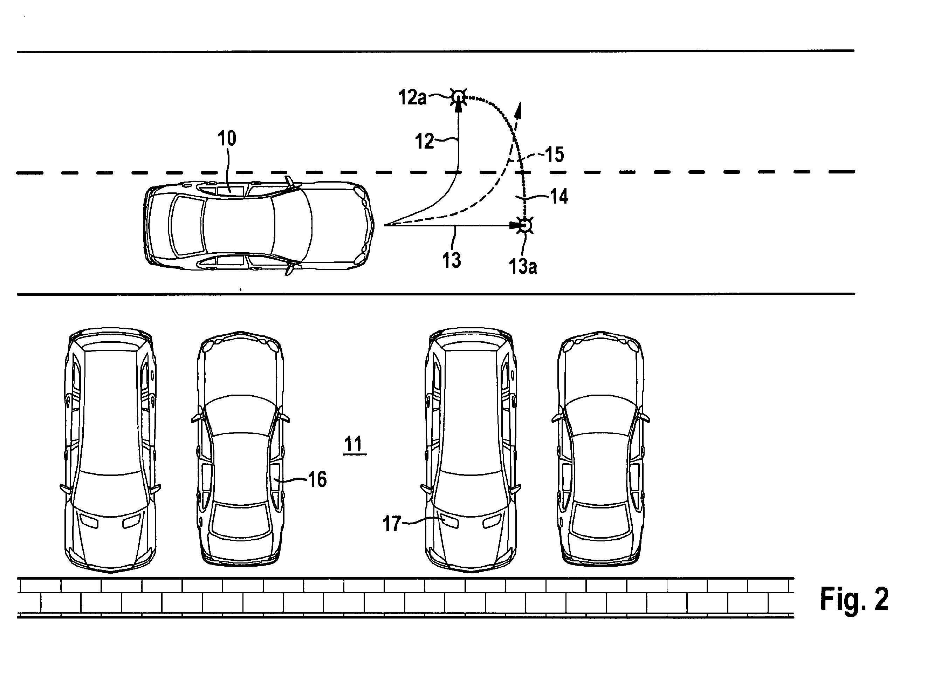

Figur 1 zeigt eine Parksituation, in der die erfindungsgemäße Vorrichtung zum unterstützen Einparken eines Fahrzeugs 10 zur Anwendung gebracht werden kann. Das Fahrzeug 10 wird durch einen Fahrer entlang in einer Fahrtrichtung 19 bewegt. Zwischen zwei Hindernissen 16 und 17, die als parkende Kraftfahrzeuge dargestellt sind, erstreckt sich eine Parklücke 11. Das Fahrzeug 10 weist eine Sensoreinrichtung 18 auf, die über Sensorsignale 20 die Parklücke 11 zumindest erkennt. Die Erkennung der Parklücke 11 durch die Sensoreinrichtung 18 beruht lediglich auf der Erkennung eines Eckbereiches 16a des ersten Hindernisses 16, an dem das Fahrzeug 10 vorbei fährt. Durch die Anordnung der Sensoreinrichtung 18 am vorderen Bereich des Kraftfahrzeugs 10 genügt lediglich eine teilweise Überdeckung der Parklücke 11 durch das Fahrzeug 10. Die dargestellte Parksituation betrifft ein Stadium des Einparkens des Fahrzeugs 10 in die Parklücke 11, bevor eine weitere Einparkvorrichtung zum geführten Einparken des Fahrzeugs 10 in die Parklücke 11 aktiviert wird. Die Bestimmung möglicher Bewegungsbahnen zur Führung des Fahrzeugs 10 in eine Startposition ist in der folgenden Figur 2 dargestellt. Die weitere Einparkvorrichtung zur geführten Ausführung von Rangierzügen kann mit der erfindungsgemäßen Vorrichtung auch eine Einheit, insbesondere eine bauliche Einheit, bilden.

Figur 2 zeigt die Parksituation gemäß Figur 1, wobei durch die Vorrichtung zwei Bewegungsbahnen 12 und 13 bestimmt werden, wobei diese den Fahrer des Fahrzeugs 10 zur Anzeige gebracht werden. Die Bewegungsbahn 12 ist als Linkszug ausgeführt, wobei die Bewegungsbahn 13 einen Geradeauszug zeigt. Wählt der Fahrer den Linkszug 12, so muss dieser einen Lenkeinschlag ausführen um das Fahrzeug in eine erste Startposition 12a zu führen. Wählt der Fahrer hingegen den Geradeauszug 13, muss dieser das Fahrzeug 10 an der Parklücke 11 weiter vorbei führen, um in die zweite Startposition 13a zu gelangen.

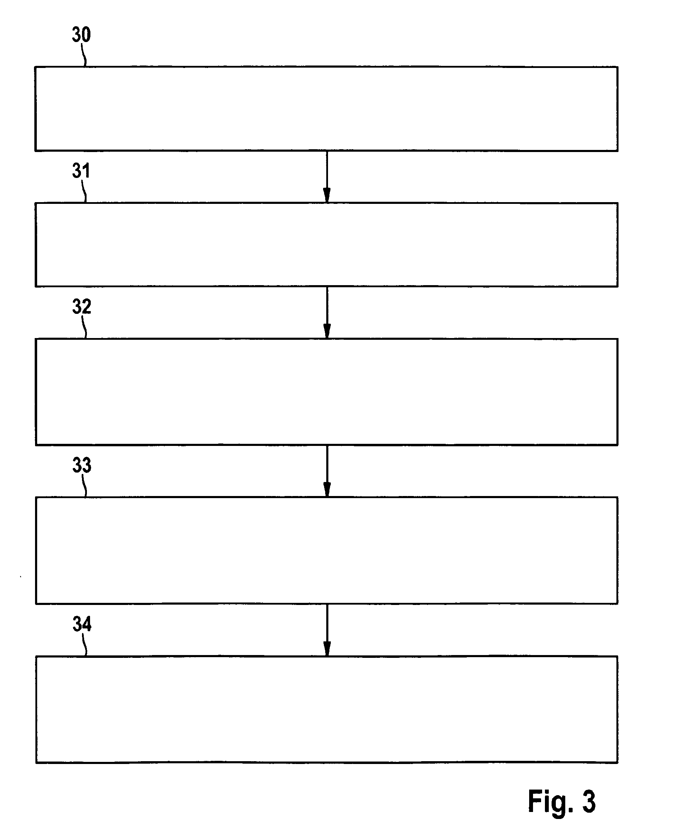

Ferner ist eine Ist-Bahn 15 dargestellt, die die aktuelle Stellung des Lenkrades des Kraftfahrzeugs 10 wiedergibt. Bewegt der Fahrer das Lenkrad nach links, um beispielsweise entsprechend der ersten Bewegungsbahn 12 den Linkszug 12 auszuführen, so wander die Ist-Bahn 15 in Richtung zum Linkszug 12. Entscheidet sich der Fahrer, den Geradeauszug 13 auszuführen, kann dieser das Lenkrad in Richtung zur Geradeausfahrt bewegen, so dass sich die Ist-Bahn 15 in Richtung zum Geradeauszug 13 bewegt. Folglich wird dem Fahrer eine Information bereitgestellt, wie sich das Fahrzeug 10 bewegen würde, wenn gemäß der aktuellen Lenkradstellung ein Vorwärtszug in eine der Startpositionen 12a bzw. 13a ausgeführt wird. Gemäß der Darstellung wird deutlich, dass zwischen dem Linkszug 12 und dem Geradeauszug 13 ein Bewegungsfenster 14 aufgespannt wird. Das Fahrzeug 10 kann durch den Fahrer in jede beliebige Position gebracht werden, die sich zwischen der ersten Startposition 12a und der zweiten Startposition 13a befindet, die geeignet ist, anschließend ein assistierendes Einparksystem zu aktivieren, um das Fahrzeug 10 durch einen Rückwärtszug in die Parklücke 11 zu bewegen. Ein Verfahren zum unterstützten Einparken eines Fahrzeugs 10 in eine Parklücke 11 ist in der folgenden Figur 3 durch ein Diagramm dargestellt.

Figur 3 zeigt schematisch ein Verfahren zum unterstützten Einparken eines Fahrzeugs in eine quer zum Fahrzeug angeordnete Parklücke. Das Verfahren ist dabei in mehrere Schritte 30 bis 34 gegliedert. Gemäß dem ersten Verfahrensschritt 30 erreicht das Fahrzeug eine Parklücke. Die erfindungsgemäße Vorrichtung zum vorbereitenden, unterstützten Einparken des Fahrzeugs in eine Parklücke kann sich - bei Erkennen der Parklücke - entweder selbst aktivieren oder der Fahrer aktiviert das System über eine entsprechende Schnittstelle. In einem weiteren Verfahrensschritt 31 erkennt die Vorrichtung die Parklücke, wobei das Fahrzeug grundsätzlich nicht vollständig an der Parklücke vorbeigeführt werden muss. Die Erkennung der Parklücke erfolgt durch eine Sensoreinrichtung, wobei diese im vorderen Bereich des Fahrzeugs angeordnet ist. Die Erkennung beruht auf einer Kommunikation mit einem Eckbereich eines ersten Hindernisses, das die Parklücke begrenzt.

In einem weiteren Verfahrensschritt 32 erfolgt eine Bestimmung und eine Anzeige möglicher Bahnen durch ein Anzeigemittel, auf denen ein Rangierzug in eine Startposition zum Starten eines geführten Einparkens erfolgen kann. Der Rangierzug betrifft dabei insbesondere einen Rückwärtszug, so dass durch die Vorrichtung eine Startposition bestimmt wird, die vorzugsweise nur einen weiteren, geführten Rückwärtszug erforderlich macht.

Gemäß eines weiteren Verfahrensschrittes 33 erfolgt eine Auswahl einer möglichen Bahn aus der Anzeige durch den Fahrer, worauf das Ausführen des Rangierzuges in die Startposition durch freies Führen des Fahrzeugs durch den Fahrer erfolgt.

Der Verfahrensschritt 34 zeigt einen letzten Verfahrensschritt, der das Aktivieren einer assistierenden Einparkvorrichtung zum Bereitstellen eines geführten Einparkzuges des Fahrzeugs in die Parklücke betrifft. Selbstverständlich kann der Fahrer das Fahrzeug auch ohne assistierende Einparkvorrichtung durch einen selbst ausgeführten Rückwärtszug in die Parklücke bewegen.

## Patentansprüche

1. Vorrichtung zum unterstützten Einparken eines Fahrzeugs (10), insbesondere eines Kraftfahrzeugs, in eine quer zum Fahrzeug (10) vorhandene Parklücke (11), mit wenigstens einer Sensoreinrichtung (18), die zumindest zur Erkennung der Parklücke (11) ausgebildet ist, und mit einem Anzeigemittel, durch das einem Fahrer des Fahrzeugs (10) eine Bewegungsbahn (12, 13) anzeigbar ist, auf der das Fahrzeug (10) bewegbar ist, **dadurch gekennzeichnet, dass** die Vorrichtung zur Bestimmung wenigstens zwei möglicher Bewegungsbahnen (12, 13) ausgebildet ist, auf denen das Fahrzeug (10) durch den Fahrer in eine Startposition (12a, 13a) bewegbar ist, an der der Fahrer eine Einparkvorrichtung aktiviert, so dass das Fahrzeug (10) durch wenigstens einen nachfolgenden durch die Einparkvorrichtung geführten Einparkzug in die Parklücke (11) bewegbar ist.

2. Vorrichtung nach Anspruch 1, **dadurch gekennzeichnet, dass** eine erste mögliche Bewegungsbahn (12) als Bahn eines Linkszuges (12) und eine zweite mögliche Bewegungsbahn (13) als Bahn eines Geradeauszuges (13) ausgebildet ist.

3. Vorrichtung nach Anspruch 2, **dadurch gekennzeichnet, dass** durch die Bahn des Linkszuges (12) und die Bahn des Geradeauszuges (13) ein Bewegungsfenster (14) bestimmt ist, wobei das Fahrzeug (10) innerhalb des Bewegungsfensters (14) in die mögliche Startposition (12a, 13a) bewegbar ist.

4. Vorrichtung nach einem der Ansprüche 1 bis 3, **dadurch gekennzeichnet, dass** ein Anzeigemittel vorgesehen ist, durch das die erste Bewegungsbahn (12), die zweite Bewegungsbahn (13) und vorzugsweise das durch die Bewegungsbahnen (12, 13) bestimmte Bewegungsfenster (14) anzeigbar ist.

5. Vorrichtung nach Anspruch 4, **dadurch gekennzeichnet, dass** durch die Vorrichtung eine Ist- Bahn (15) bestimmbar ist, die sich aus der aktuellen Stellung eines Lenkrades des Kraftfahrzeugs (10) ergibt, wobei die Ist- Bahn (15) auf dem Anzeigemittel anzeigbar ist.

6. Vorrichtung nach einem der Ansprüche 2 bis 5, **dadurch gekennzeichnet, dass** der Linkszug (12) und der Geradeauszug (13) als nicht geführte Vorwärtszüge des Fahrzeugs (10) durch den Fahrer ausführbar sind, wobei der zumindest eine auf den Linkszug (12) bzw. den Geradeauszug (13) folgende geführte Einparkzug des Fahrzeugs (10) in die Parklücke (11) als ein durch eine assistierende Einparkvorrichtung geführter Rückwärtszug ausgeführt ist.

7. Vorrichtung nach einem der vorgenannten Ansprüche, **dadurch gekennzeichnet, dass** die Parklücke (11) eine Querparklücke (11) ist und seitlich durch wenigstens ein Hindernis (16, 17) begrenzt ist, wobei die Erkennung der Parklücke (11) durch die Sensoreinrichtung (18) wenigstens die Erkennung eines Eckbereiches (16a) zumindest eines der Hindernisse (16, 17) umfasst.

8. Verfahren zum unterstützten Einparken eines Fahrzeugs (10), insbesondere eines Kraftfahrzeugs, in eine quer zum Fahrzeug (10) angeordnete Parklücke (11), mit wenigstens einer Sensoreinrichtung (18), durch die die Parklücke (11) zumindest erkannt werden kann, und mit einem Anzeigemittel, durch das einem Fahrer des Fahrzeugs (10) eine Bewegungsbahn (12, 13) angezeigt wird, auf der das Fahrzeug (10) bewegt werden kann, wobei das Verfahren die folgenden Schritte aufweist:
- Erreichen der Parklücke (11) durch das Fahrzeug (10),
- Erkennen der Parklücke (11) durch eine Vorrichtung,
- Bestimmung möglicher Bahnen (12, 13) durch die Vorrichtung, auf denen ein Rangierzug in eine Startposition (12a, 13a) erfolgen kann, an der der Fahrer eine Einparkvorrichtung aktiviert zur Ausführung eines geführten Einparkzug des Fahrzeugs (10) durch die Einparkvorrichtung in die Parklücke (11).

9. Verfahren nach Anspruch 8, **dadurch gekennzeichnet, dass** nach der Bestimmung möglicher Bahnen (12, 13) durch die Vorrichtung ein Rangierzug nach einer möglichen, bestimmten Bahn (12, 13) durch den Fahrer ausgeführt wird.

10. Verfahren nach einem der Ansprüche 8 oder 9, **dadurch gekennzeichnet, dass** nach Ausführung des Rangierzuges durch den Fahrer eine Aktivierung einer assistierenden Einparkvorrichtung zur Ausführung eines geführten Einparkzuges durch die assistierende Einparkvorrichtung vorgenommen wird.

## Claims

1. Device for the assisted parking of a vehicle (10) in particular of a motor vehicle, into a parking space (11) which is transversely positioned with respect to the vehicle (10), having at least one sensor device (18) which is at least designed to detect the parking space (11), and having a display means by which a movement path (12, 13) on which the vehicle (10) can move can be displayed to a driver of the vehicle (10), **characterized in that** the device is designed to determine at least two possible movement paths (12, 13) on which the vehicle (10) can be moved by the driver into a starting position (12a, 13a) at which the driver activates a parking device, with the result that the vehicle (10) can be moved into the parking space (11) by means of at least one subsequent parking manoeuvre controlled by the parking device.

2. Device according to Claim 1, **characterized in that** a first possible movement path (12) is embodied as a path of a leftward manoeuvre (12) and a second possible movement path (13) is embodied as a path of a straight-ahead manoeuvre (13).

3. Device according to Claim 2, **characterized in that** a movement window (14) is determined by the path of the leftward manoeuvre (12) and the path of the straight-ahead manoeuvre (13), wherein the vehicle (10) can be moved into the possible starting position (12a, 13a) within the movement window (14).

4. Device according to one of Claims 1 to 3, **characterized in that** a display means is provided, by which the first movement path (12), the second movement path (13) and preferably the movement window (14) which is determined by the movement paths (12, 13) can be displayed.

5. Device according to Claim 4, **characterized in that** the device can determine an actual path (15) which arises from the current position of a steering wheel of the motor vehicle (10), wherein the actual path (15) can be displayed on the display means.

6. Device according to one of Claims 2 to 5, **characterized in that** the leftward manoeuvre (12) and the straight-ahead manoeuvre (13) can be implemented as non-controlled forward manoeuvres of the vehicle (10) by the driver, wherein the at least one controlled parking manoeuvre of the vehicle (10) into the parking space (11), which follows the leftward manoeuvre (12) or the straight-ahead manoeuvre (13), is embodied as a rearward manoeuvre which is controlled by an assisting parking device.

7. Device according to one of the preceding claims, **characterized in that** the parking space (11) is a transverse parking space (11) and is bounded laterally by at least one obstacle (16, 17), wherein the detection of the parking space (11) by the sensor device (18) comprises at least the detection of a corner region (16a) of at least one of the obstacles (16, 17).

8. Method for the assisted parking of a vehicle (10), in particular of a motor vehicle, into a parking space (11) which is arranged transversely with respect to the vehicle (10), having at least one sensor device (18) by means of which the parking space (11) can at least be detected, and having a display means by which a movement path (12, 13) on which the vehicle (10) can be moved is displayed to a driver of the vehicle (10), wherein the method has the following steps:
- the vehicle (10) reaches the parking space (11),
- a device detects the parking space (11),
- possible paths (12, 13) on which a manoeuvre can take place into a starting position (12a, 13a) at which the driver activates a parking device for carrying out a controlled parking manoeuvre of the vehicle (10) into the parking space (11) by means of the parking device are determined by the device.

9. Method according to Claim 8, **characterized in that** after possible paths (12, 13) are determined by the device a manoeuvre towards a possible, determined path (12, 13) is carried out by the driver.

10. Method according to one of Claims 8 or 9, **characterized in that** after the manoeuvre is carried out by the driver, an assisting parking device for carrying out a controlled parking manoeuvre by means of the assisting parking device is activated.

## Revendications

1. Dispositif d'aide au stationnement d'un véhicule (10), en particulier d'un véhicule automobile, dans une place de stationnement (11) située transversalement par rapport au véhicule (10), comprenant au moins un dispositif de capteur (18) qui est réalisé au moins pour reconnaître la place de stationnement (11), et comprenant un moyen d'affichage qui permet d'indiquer à un conducteur du véhicule (10) une trajectoire de mouvement (12, 13) sur laquelle le véhicule (10) peut être déplacé, **caractérisé en ce que** le dispositif est réalisé pour déterminer au moins deux trajectoires de mouvement possibles (12, 13) sur lesquelles le véhicule (10) peut être déplacé par le conducteur dans une position de départ (12a, 13a) à laquelle le conducteur active un dispositif de stationnement, de sorte que le véhicule (10) puisse être déplacé dans la place de stationnement (11) par au moins un tronçon de parcours de stationnement suivant guidé par le dispositif de stationnement.

2. Dispositif selon la revendication 1, **caractérisé en ce qu'**une première trajectoire de mouvement possible (12) est réalisée sous forme de trajectoire d'un tronçon de parcours gauche (12) et une deuxième trajectoire de mouvement possible (13) est réalisée sous forme de trajectoire d'un tronçon de parcours en ligne droite (13).

3. Dispositif selon la revendication 2, **caractérisé en ce qu'**une fenêtre de mouvement (14) est définie par la trajectoire du tronçon de parcours gauche (12) et la trajectoire du tronçon de parcours en ligne droite (13), le véhicule (10) pouvant être déplacé à l'intérieur de la fenêtre de mouvement (14) dans la position de départ possible (12a, 13a).

4. Dispositif selon l'une quelconque des revendications 1 à 3, **caractérisé en ce qu'**il est prévu un moyen d'affichage par l'intermédiaire duquel la première trajectoire de mouvement (12), la deuxième trajectoire de mouvement (13) et de préférence la fenêtre de mouvement (14) déterminée par les trajectoires de mouvement (12, 13) peuvent être indiquées.

5. Dispositif selon la revendication 4, **caractérisé en ce qu'**une trajectoire réelle (15) peut être déterminée par le dispositif, laquelle résulte de la position actuelle d'un volant de direction du véhicule automobile (10), la trajectoire réelle (15) pouvant être indiquée sur le moyen d'affichage.

6. Dispositif selon l'une quelconque des revendications 2 à 5, **caractérisé en ce que** le tronçon de parcours gauche (12) et le tronçon de parcours en ligne droite (13) peuvent être réalisés par le conducteur sous forme de tronçons de parcours d'avance du véhicule (10) non guidés, l'au moins un tronçon de parcours de stationnement du véhicule (10) suivant guidé sur le tronçon de parcours gauche (12) ou sur le tronçon de parcours en ligne droite (13) dans la place de stationnement (11) étant réalisé sous forme d'un tronçon de parcours arrière guidé par un dispositif d'aide au stationnement.

7. Dispositif selon l'une quelconque des revendications précédentes, **caractérisé en ce que** la place de stationnement (11) est une place de stationnement transversale (11) et est limitée latéralement par au moins un obstacle (16, 17), la reconnaissance de la place de stationnement (11) par le dispositif de capteur (18) comprenant au moins la reconnaissance d'une région de coin (16a) d'au moins l'un des obstacles (16, 17).

8. Procédé d'aide au stationnement d'un véhicule (10), en particulier d'un véhicule automobile, dans une place de stationnement (11) située transversalement par rapport au véhicule (10), comprenant au moins un dispositif de capteur (18) permettant au moins de reconnaître la place de stationnement (11), et comprenant un moyen d'affichage qui permet d'indiquer à un conducteur du véhicule (10) une trajectoire de mouvement (12, 13) sur laquelle le véhicule (10) peut être déplacé, le procédé présentant les étapes suivantes :
- rapprochement du véhicule (10) de la place de stationnement (11),
- reconnaissance de la place de stationnement (11) par un dispositif,
- détermination de trajectoires possibles (12, 13) par le dispositif, sur lesquelles peut avoir lieu un tronçon de parcours de manoeuvre dans une position de départ (12a, 13a) à laquelle le conducteur active un dispositif de stationnement pour effectuer un tronçon de parcours de stationnement guidé du véhicule (10) par le dispositif de stationnement dans la place de stationnement (11).

9. Procédé selon la revendication 8, **caractérisé en ce qu'**après la détermination de trajectoires possibles (12, 13) par le dispositif, un tronçon de parcours de manoeuvre est réalisé par le conducteur suivant une trajectoire déterminée possible (12, 13).

10. Procédé selon l'une quelconque des revendications 8 ou 9, **caractérisé en ce qu'**après la réalisation du tronçon de parcours de manoeuvre par le conducteur, une activation d'un dispositif d'aide au stationnement est réalisée pour effectuer un tronçon de parcours de stationnement guidé par le dispositif d'aide au stationnement.
